(19) **Europäisches Patentamt / European Patent Office / Office européen des brevets**

(11) **EP 1 295 483 B1**

(12) **EUROPEAN PATENT SPECIFICATION**

(45) Date of publication and mention
of the grant of the patent:
**04.08.2010 Bulletin 2010/31**

(51) Int Cl.:
**H04N 7/26** (2006.01)

(21) Application number: **01939877.5**

(22) Date of filing: **01.06.2001**

(86) International application number:
**PCT/US2001/018009**

(87) International publication number:
**WO 2001/099437 (27.12.2001 Gazette 2001/52)**

(54) **METHOD OF PERFORMING MOTION ESTIMATION**

METHODE ZUR DURCHFÜHRUNG EINER BEWEGUNGSSCHÄTZUNG

PROCEDE PERMETTANT DE REALISER UNE ESTIMATION DE MOUVEMENT

(84) Designated Contracting States:
**AT BE CH CY DE DK ES FI FR GB GR IE IT LI LU
MC NL PT SE TR**

(30) Priority: **16.06.2000 US 596127**

(43) Date of publication of application:
**26.03.2003 Bulletin 2003/13**

(73) Proprietor: **Intel Corporation
Santa Clara, CA 95052 (US)**

(72) Inventors:
  • **KIM, Hyun
    Scottsdale, AZ 85254 (US)**
  • **ACHARYA, Tinku
    Chandler, AZ 85226 (US)**
  • **TSAI, Ping-Sing
    Gilbert, AZ 85233 (US)**

(74) Representative: **Harrison Goddard Foote
40-43 Chancery Lane
London
WC2A 1JA (GB)**

(56) References cited:
**EP-A- 0 592 128**

• **ISO/IEC AD HOC GROUP ON MPEG-4 VIDEO VM
EDITING: "MPEG-4 Video Verification Model
Version 8.0 ISO/IEC JTC1/SC29/WG11
MPEG97/N1796" ISO/IEC JTC1/SC29/WG11
MPEG97/N1796, July 1997 (1997-07), pages 1-283,
XP002177337**
• **KOSSENTINIT F ET AL: "PREDICTIVE RD
OPTIMIZED MOTION ESTIMATION FOR VERY
LOW BIT-RATE CODING" IEEE JOURNAL ON
SELECTED AREAS IN COMMUNICATIONS, IEEE
INC. NEW YORK, US, vol. 15, no. 9, 1 December
1997 (1997-12-01), pages 1752-1762,
XP000726013 ISSN: 0733-8716**
• **DUBIUSSON S ET AL: "Motion compensation
using adaptive rectangular partitions" IMAGE
PROCESSING, 1999. ICIP 99. PROCEEDINGS.
1999 INTERNATIONAL CONFERENCE ON KOBE,
JAPAN 24-28 OCT. 1999, PISCATAWAY, NJ, USA,
IEEE, US, 24 October 1999 (1999-10-24), pages
56-60, XP010369244 ISBN: 0-7803-5467-2**
• **HYUN MUN KIM ET AL: "CAS: Context Adaptive
Search for motion estimation" PROCEEDINGS
INTERNATIONAL CONFERENCE ON
INFORMATION TECHNOLOGY: CODING AND
COMPUTING, PROCEEDINGS INTERNATIONAL
CONFERENCE ON INFORMATION
TECHNOLOGY: CODING AND COMPUTING, LAS
VEGAS, NV, USA, 2-4 APRIL 2001, pages 202-206,
XP002190533 2001, Los Alamitos, CA, USA, IEEE
Comput. Soc, USA ISBN: 0-7695-1062-0**

**Description**

BACKGROUND

The present disclosure is related to performing motion estimation, and, more particularly, to performing motion estimation for video coding, such as, for example, low-bit rate video coding.

As is well-known, motion estimation is a common aspect or component of video encoding. There are a variety of techniques of performing video coding, some of which are related to standards and some of which are not. Popular standards include: ITU-T "Video coding for low bit-rate communications," ITU-T Recommendation H.263, version 1, Nov. 1995 and version 2, Jan. 1998; "Generic Coding of Moving Pictures and Associated Audio Information: Video," ISO/IEC 13818-2: International Standard 1995; and "Coding of audio-visual Objects-Part 2: Visual Amendment 1; Visual extensions," ISO/IEC 14496-2: Draft of January 6, 2000; respectively, referred to as H.263, H.263+, MPEG-2, and MPEG-4, hereinafter. These are examples of decoding/decompression standards. Typically, these standards or specifications for these standards provide little or no guidance about compression methodologies that may be employed, including in connection with motion estimation.

Motion estimation is employed to remove temporal redundancies in video frames so that the bandwidth of the communications channel used to transmit the frames may be utilized more efficiently. Motion estimation is typically accomplished by employing block search techniques. A 'full motion' search methodology, in which essentially all pixel locations are searched within a search window, is typically computationally very complex and, at times, may be prohibitive for real-time applications. In the case of full search motion estimation, where macroblocks are employed, the number of search points is 1,024 for a 32 x 32 window.

To reduce this computational complexity, different approaches have been proposed. A popular approach is based on or referred to as a logarithmic search. In this approach, instead of searching every search point or pixel location within a search window, nine initial points, which are separated by a quarter of a search window, are checked or searched. After finding a search point or pixel location from these nine which provides the least sum of absolute difference (SAD) value or the least value from the nine of another error measurement, like mean-squared error (MSE), the search is continued at eight additional points that are centered about that point by reducing the distance between search points by half. This continues until the distance between two search points is one pixel apart. In this approach, 33 search points produce a result, in comparison with 1,024 search points for a full motion search. It is noted that each additional search point adds additional computation.

Although a logarithmic search reduces the number of search points, this approach has some disadvantages. For example, the quality of the image produced from this motion estimation approach is generally degraded relative to a full motion search. Furthermore, with 33 search points, this approach, in some instances, still may not be suitable for real-time applications. Therefore, a need exists for an approach or technique that is comparable, or even better, in terms of image quality and yet less computationally complex than the logarithmic search approach.

ISO/IEC AD HOC GROUP ON MPEG-4 VIDEO VM EDITING: "MPEG-4 Video Verification Model Version 8.0 ISO/IEC JTC1/SC29/WG11 MPEG97/N1796" ISO/IEC JTC1/SC29NVG11 MPEG97/N1796, July 1997 (1997-07), pages 1-283 discloses that MPEG-4 aims to provide standardized core technologies allowing efficient storage, transmission and manipulation of video data in multimedia environments. In particular, integer pixel motion estimation is discussed in which both 8x8 and 16x16 vectors are obtained from a search algorithm. There is further disclosed the differential coding of horizontal and vertical motion vectors using a spatial neighbourhood of three motion vectors already transmitted. These three motion vectors are candidate predictors for the differential coding. The differential coding of motion vectors is performed with reference to a reconstructed shape. In the special cases at borders of the current video object plane (VOP) the following decision rules are applied: 1) if the macroblock of one and only one candidate predictor is outside the current VOP, it is set to zero, 2) if the macroblocks of two and only two candidate predictors are outside of the VOP, they are set to the third candidate predictor and 3) if the macroblocks of all three candidate predictors are outside of the VOP, they are set to zero.

In KOSSENTINI, F. et al: "Predictive RD optimized motion estimation for very low bit-rate coding" IEEE Journal on Selected Areas in Communication, 15(9), 1 December 1997, pp 1752-1762 predictive rate-distortion (RD) optimized motion estimation techniques are studied and developed for very low bit-rate video coding. Four types of predictors are studied: mean, weighted mean, median, and statistical mean. The weighted mean is obtained using conventional linear prediction techniques. The statistical mean is obtained using a finite-state machine modeling method based on dynamic vector quantization. By employing prediction, the motion vector search can then be constrained to a small area. The effective search area is reduced further by varying its size based on the local statistics of the motion field, through using a Lagrangian as the search matching measure and imposing probabilistic models during the search process. The disclosed motion estimation techniques are analyzed within a simple DCT-based video coding framework, where an RD criterion is used for alternating among three coding modes for each $8 \times 8$ block: motion only, motion-compensated prediction and DCT, and intra-DCT. Experimental results indicated that the techniques yield computation-performance tradeoffs. When such techniques are applied to an RD optimized H.263 framework at very low bit rates, the resulting H. 263 compliant video coder is shown to outperform an H.263 TMN5 coder in terms of compression performance and computations simultaneously

EP-A-0592128 discloses detection of a motion vector by searching in a first area based upon a position of the subject block and a second area based on a position indicated by a predictive vector, where the predictive vector is based on a previous motion vector for a previous block to the subject block.

DUBIUSSON S ET AL: "Motion compensation using adaptive rectangular partitions" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA, IEEE, US, 24 October 1999 (1999-10-24), pages 56-60, ISBN: 0-7803-5467-2 presents the partitioning of grey-scale images using rectangular partitions, and its use for image prediction by motion compensation. Generally, a good prediction of a video frame can he made if an accurate motion estimation is computed, most often by using block matching algorithms (BMA). There is proposed the use of an adaptive rectangular partition in order to improve motion estimation and compensation steps. Rectangular partitioning allows adaptation to image texture and generation of variable size blocks. Different adaptations of the classical BMA to the rectangular partitioning are tested to improve motion compensation performances. Simple translational BMA is considered and this algorithm extended by using spatial transformations to cope with rotations and scalings. The last algorithm is furthermore optimized by taking into account the shape of rectangles in the partition. Simulations show that the last method provides higher PSNR.

HYUN MUN KIM ET AL: "CAS: Context Adaptive Search for motion estimation" PROCEEDINGS INTERNATIONAL CONFERENCE ON INFORMATION TECHNOLOGY: CODING AND COMPUTING, PROCEEDINGS INTERNATIONAL CONFERENCE ON INFORMATION TECHNOLOGY: CODING AND COMPUTING, LAS VEGAS, NV, USA, 2-4 APRIL 2001, pages 202-206, XP002190533 2001, Los Alamitos, CA, USA, IEEE Comput. Soc, USA ISBN: 0-7695-1062-0 states that most motion estimation algorithms neglect to take the advantage of strong correlations within motion fields. Search windows stay the same through the image sequences and the estimation needs heavy computation. To reduce this computational complexity several algorithms have been proposed. One of the popular method is logarithmic search. This method reduces the complexity but it neglects the high correlation of motion field. Also the number of search points increase as the search range increases. There is proposed a fast motion estimation method that uses "Context Adaptive Search (CAS)" windows, using strong spatial correlation of the motion field and the median predictor for motion vector coding. The variable size search window centered by the median values reduces complexity for motion estimation greatly but also decreases the entropy of motion vectors for motion vector encoding. The simulation results show that the method outperforms the logarithmic search in terms of compression efficiency up to 8 % with only one-third search points. The overall PSNR value is also slightly better

According to a first aspect of the invention there is provided a method of performing motion estimation as claimed in claim 1.

According to a second aspect of the invention there is provided a system for performing motion estimation as claimed in claim 7.

Further embodiments of the invention are included in the dependent claims.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

FIG. 1 is a schematic diagram illustrating motion vectors associated with macroblocks for use in an embodiment of a technique for motion vector prediction in accordance with the present invention;

FIG. 2 is a table illustrating simulation results of applying an embodiment in accordance with the invention to motion estimation;

FIG. 3 is a schematic diagram illustrating an embodiment of integer pixel motion estimation;

FIG. 4 is a plot illustrating the application of an embodiment in accordance with the present invention to an example involving motion vectors; and

FIG. 5 is a table illustrating simulation results of applying another embodiment in accordance with the invention to motion estimation.

DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

As previously indicated, motion estimation is employed in video encoding. MPEG-2 and MPEG-4 and other video standards are examples where it is applied for video encoding. However, these methodologies typically do not specify the compression techniques to employ, particularly in connection with motion estimation. As indicated, motion estimation is typically employed to remove temporal redundancies when transmitting video frames in order to make a more efficient use of a limited amount of bandwidth available to transmit the video frames from one location to another, for example. Of course, video coding and decoding is also used in other situations, such as in storage, and the invention is not limited to a particular application of these techniques.

One technique of motion estimation is referred to as full motion search. However, this approach is computationally complex and typically prohibitive for real-time applications. In the case of full search motion estimation, the number of search points in a 32 x 32 window, which would be employed in connection with a macroblock, is 1024. The term macroblock is well-known and well-understood and will not be explained in any great detail; however, whereas it typically refers to a portion of a video frame comprising a square array of luminance pixels, the array having dimensions 16x16, and two corresponding square arrays of chroma pixels, each array having dimensions 8 x 8, in this context, it refers to the luminance array and not the chroma arrays. This is the convention applied for this particular embodiment, because, typically, the motion vectors for chrominance are derived from those for the luminance array; however, of course, the invention is not limited in scope in this respect.

To reduce computational complexity, several techniques have been proposed. As previously indicated, a popular approach is based on a logarithmic search. In this approach, as previously described, instead of searching all of the search points within a search window, initial points are searched which are apart from each other by a quarter of the search window size. After finding a point or pixel location of the nine points which gives the least sum of absolute difference (SAD) value or some other measure, the approach then considers or checks eight additional points that are centered about that point by reducing the distance between search points by half. This approach continues until the distance between two search points becomes one pixel apart. As a result, 33 search points are checked in comparison with 1,024 for a full motion search. It is noted that here only the luminosity pixel signal data is employed. As previously indicated, although this approach reduces the complexity in comparison with the full motion search, it still may not be suitable for some real time applications, and furthermore, may produce lower quality video images or frames.

In contrast, an embodiment of a method of performing motion estimation in accordance with the present invention reduces computational complexity and enhances compression performance both in terms of the quality of the image produced and the compression efficiency that results, when compared, for example, with the logarithmic search method. In this particular embodiment, on the transmitting side of a communications channel, for example, a method of performing motion estimation includes the following. Median motion vector components are determined from a set of neighboring macroblocks that include motion vectors. It is noted, of course, that while this particular embodiment employs macroblocks, the invention is not limited in scope in this respect. For example, other portions of a frame other than a macroblock may be employed. Macroblocks are employed in this embodiment, however, because macroblocks are well-known and, thus, provide convenience, but the invention is in no way restricted to a particular number of pixels or a particular shape or arrangement of pixels to which an embodiment in accordance with the present invention is to be applied.

Next, a window of a predetermined size and shape around a pixel location associated with the determined median motion vector components is searched. More particularly, the median motion vector components are applied to the macroblock to produce a pixel location and that pixel location is the center of the search window, for this particular embodiment. In addition to searching a window of a predetermined size and shape, a pixel location associated with a motion vector having a zero value for all of its components is also search or checked. Therefore, the pixel locations of the window and a pixel location associated with a zero motion vector are checked or searched to determine, of these, which pixel locations produce the closest match with the particular macroblock to which this technique is being applied.

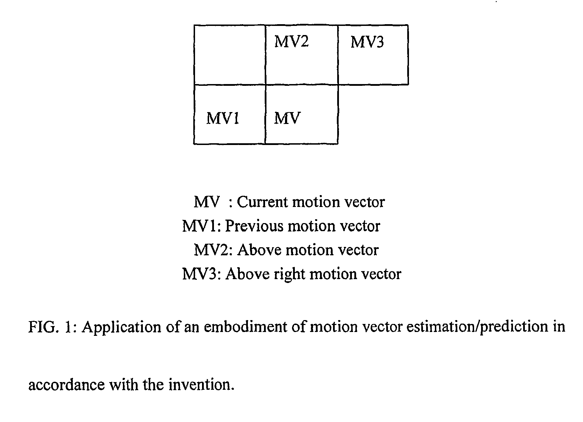

Of course, as has been previously indicated, the invention is not limited in scope to a particular embodiment and many variations are possible. For example, the zero value motion vector may be omitted from the search in an alternative embodiment. Likewise, the closest match when searching pixel locations may be determined by applying the sum of absolute differences (SAD) between the particular macroblock and a macroblock centered at the pixel location being checked or searched, although the invention is not limited in scope in this respect. However, alternatively, the least mean square error (MSE) approach may be employed, or any one of a number of other possible approaches to measure the error or differences may be employed. Likewise, the median motion vector components in this particular embodiment are determined from a set of neighboring macroblocks, and, as illustrated in FIG. 1, in this embodiment, specifically three. Likewise, again, the invention is not limited in scope to any particular approach regarding neighboring macroblocks and any one of a number of approaches characterizing the set of neighboring macroblocks employed are possible. For example, fewer macroblocks or more macroblocks may be employed. Likewise, in alternative embodiments, successive or sequential macroblocks may not necessarily be employed.

Furthermore, in this particular embodiment, although the invention is again not limited in scope in this respect, to determine the closest match, as previously indicated, luminosity pixel signals values are employed. However, where luminosity pixel signals values are not available, as one alternative example, the component of the frame that contains the greatest amount of luminosity signal information may be employed. Likewise, luminosity may alternatively not be employed and, instead, chroma signal values or signal values where the chroma components are dominant may be employed. Again, the invention is not limited in scope to a specific approach. For example, where frames are provided in Red-Green-Blue (RGB) color space format, typically, the green pixel signal values will be employed, although, again, the invention is not limited scope in this respect.

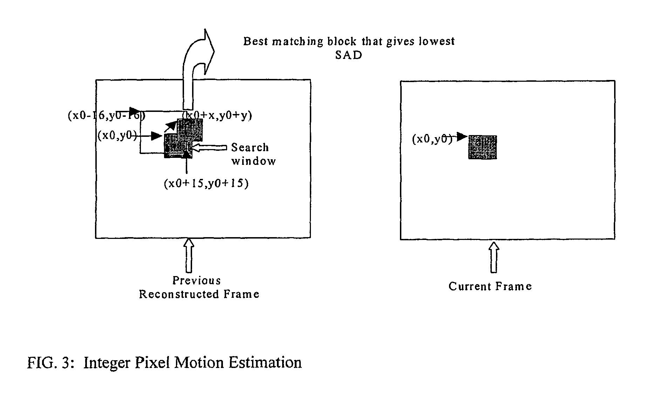

Although the invention is not limited in scope in this respect, for MPEG-4 and H.263, when interframe coding is employed, the motion vector is coded and transmitted. A compressed video data stream, as transmitted, typically comprises codes for motion vectors generated by motion estimation as well as codes for error frames. In such a situation, and in this particular embodiment, a motion vector, MV, may be represented by two components, $(MV_X, MV_Y)$, where $MV_X$ and $MV_Y$ are, respectively, the components in the horizontal and vertical directions. Typically, a motion vector may be calculated as follows, referring to FIG. 3:

$$ SAD = \min_{(x,y) \in S} \sum_{j=0}^{15} \sum_{i=0}^{15} \left| C[i,j] - R[x_0 + x + i, y_0 + y + j] \right| $$

where

| | |
|---|---|
| $(x_0, y_0)$ | Upper left corner coordinates of the current macroblock |
| $C[x,y]$ | Current macroblock luminance samples |
| $R[x,y]$ | Reconstructed previous frame luminance samples |
| S | Search range: $\{(x,y) : -16 \leq x, y < 16\}$ |
| $(MVx, MVy)$ | motion vector that results in the lowest sum above |

In this particular embodiment, to reduce the number of bits employed for motion vector coding, motion vector components, horizontal and vertical in this embodiment, are coded differentially by using a spatial neighborhood of three macroblocks, each of the macroblocks having a motion vector, as illustrated in FIG. 1. It is also noted that this neighborhood signal information has already been transmitted in this embodiment. In this embodiment then, these three motion vectors are candidate predictors for differential coding of the motion vector to currently be coded. It will, of course, be appreciated that, as indicated previously, the invention is not restricted in scope to employing the three previous macroblocks or, more particularly, the motion vectors from the three previous macroblocks. Any one of a number of previous macroblocks may be employed and the macroblocks need not be successive, as previously indicated for this particular embodiment.

In this embodiment, the motion vector coding is performed independently for the horizontal and vertical components. For each component, in this embodiment, the median value of the three candidates for a component is computed as follows:

$$ Px = Median(MV1x, MV2x, MV3x) $$

$$ Py = Median(MV1y, MV2y, MV3y) $$

For example, if MV1 equals (-2,3), MV2 equals (2,5), and MV3 equals (-1,8), then the median motion vector components, designated $P_X$ and $P_Y$ here, are -1 and 5 respectively. As indicated by the following equations:

$$ MVDx = MVx - Px $$

$$MVDy = MVy - Py$$

An aspect of this approach is the observation that, typically, spatial correlation is present for the motion vector field among neighboring macroblocks. Therefore, an efficient approach to searching may include using a smaller search window centered at $P_X$, $P_Y$. Furthermore, here, by calculating the median values separately for each vector component, the opportunity for additional information is present. In particular, if the median motion vector components come from the same macroblock, this may indicate that the motion vector field is relatively 'smooth,' meaning, in this context, that there is relatively little variation between motion vectors that are located in relatively close spatial proximity. Therefore, for this embodiment, the search window is limited to nine points centered around $P_X$, $P_Y$. However, alternatively, if the median motion vector components, here horizontal and vertical, respectively, come from different macroblocks, this may indicate that the motion field is more complicated and, therefore, the search window is increased to 25 points, although, again, centered at $P_X$, $P_Y$. Furthermore, in this embodiment, a zero motion vector for both components is also searched, although, as previously indicated, the invention is not limited in scope in this respect. A reason for employing a zero motion vector is because where it provides an acceptable match in terms of error, such as SAD, it conserves bandwidth, which in some situations may be particularly desirable. As previously indicated, in this particular embodiment, a sum of absolute differences (SAD) is employed, although the invention is not limited in scope in this respect.

Using pseudocode, this particular technique or embodiment in accordance with the invention may be characterized as follows:

```
If (Px=MV1x)  then i=1

else if Px=MV2x then i=2

else i=3


If (Py=MV1y) then j=1

else if (Py=MV2y) then j=2

else j=3


If (i==j) then

        Apply motion estimation using 3x3 search window centered by

(Px, Py);

else

        Apply motion estimation using 5x5 search window centered by

(Px, Py);

endif;
```

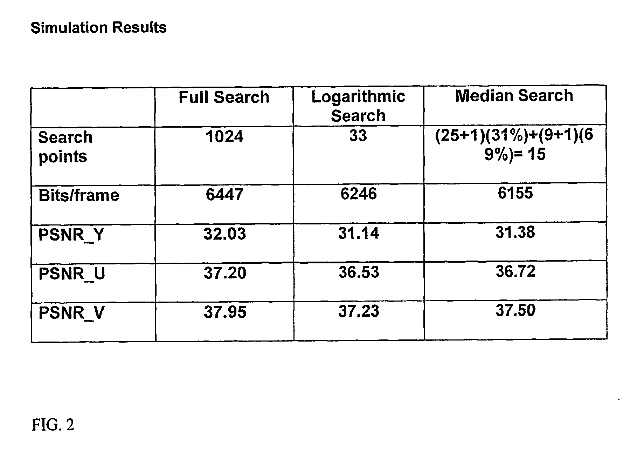

FIG. 2 is a table comparing efficiency for this particular embodiment when compared with a full motion search and a logarithmic search. In a full search, the search range is (-16, 15) so that the number of search points is 1,024, as previously indicated. Likewise, as previously indicated, the logarithmic search includes 33 search points. The number of search points for this particular embodiment, of course, depends in part on the video sequence or sequences. In this particular set of sequences to which this embodiment was applied, a smaller search window was applied 69% of the time so that the number of search points is a weighted average of 26 and 10, providing, for this example, 15 search points. These results were obtained by using image sequences with Quarter Common Intermediate Format (QCIF) sized images for 134 frames. The frame rate applied here was 10 frames per second.

The results in the table of FIG. 2 indicate less complexity where motion estimation is performed for this embodiment in accordance with the invention. This is a desirable result since, typically, motion estimation comprises a significant portion of a video encoder computational burden. The number of search points for this particular embodiment is only 1.5% of the number of search points employed for a full search, a significant reduction in computational burden. Likewise, the bit rate is reduced by more than 4.5% for this particular embodiment, when compared with the full search, although the degradation in signal-to-noise ratio is only about .45 to .65 decibels. Likewise, as the table illustrates, the peak signal-to-noise ratio (PSNR) value obtained for this particular embodiment is better than that obtained for the logarithmic search with less complexity and a smaller "bit budget."

As the previous discussion illustrates, this embodiment in accordance with the present invention has a number of advantages over state of the art approaches to motion estimation and encoding. As previously indicated, these advantages include a reduction in computational burden, an improved compression ratio, a reduction in bits for motion vector coding, and an improved peak signal-to-noise ratio relative to a logarithmic search. Furthermore, although the invention is not limited in scope in this respect, this particular embodiment is compliant with both MPEG-4 and H.263 for very low bit rate coding. Likewise, this embodiment may be implemented in hardware, software, firmware, or any combination thereof, as desired.

Another embodiment in accordance with the invention is illustrated by the following pseudo-code, where Rx and Ry are calculated as follows:

$$Rx = MAX(MV1x, MV2x, MV3x) - MIN(MV1x, MV2x, MV3x)$$

$$Ry = MAX(MV1y, MV2y, MV3y) - MIN(MV1y, MV2y, MV3y)$$

```
If (Px=MV1x)  then i=1

else if Px=MV2x then i=2

else i=3


If (Py=MV1y) then j=1

else if (Py=MV2y) then j=2

else j=3


If (i==j) {

Apply motion estimation using x_arm x y_arm search window centered by (Px, Py) where

x_arm = 3 and y_arm = 3;

}

(

else {

        set x_arm = 5 and y_arm = 5;

        if (Rx<=3) set x_arm = 3;


                            if (Ry<=3) set y_arm = 3;

                    }
```

This particular embodiment provides an advantage of less computational complexity or burden than the previous embodiment, although, there may be a sacrifice in terms of image quality as a result. This embodiment is similar to the previously described embodiment in that the median values are calculated and used to determine or deduce properties about the motion vector field.. As previously, if the median values for both coordinates come from the same macroblock, in this embodiment, the search is limited to 9 points. However, if the median values for the coordinates come from different macroblocks, then the number of points to search may or may not be increased. Rather than simply searching a 25 point window in this circumstance, as in the previous embodiment, instead, the range in the different directions are calculated and that information is employed to make decisions about the search window.

The range values, Rx and Ry, provide an indication about how the motion vector field may be changing in these directions. Therefore, if the change is relatively large, then a larger window in the direction is searched; however, if the change is relatively small, then a smaller window in that direction is searched. This reduces complexity in comparison with the previous embodiment, because in some cases, a 9 point or 15 point search will be employed for the latter embodiment, whereas a 25 point search would have been employed for the former embodiment.

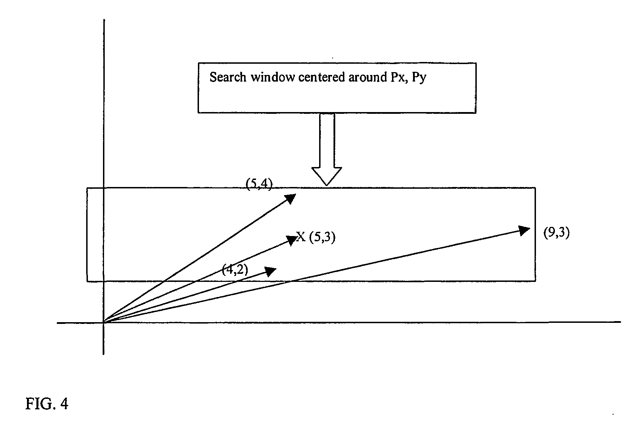

Application of this particular embodiment is specifically illustrated by an example in FIG. 4. The motion vectors are (4,2), (9,3), and (5,4). Therefore, a 3 x 5 rectangle centered at (5,3) is searched if the previously described embodiment is applied.

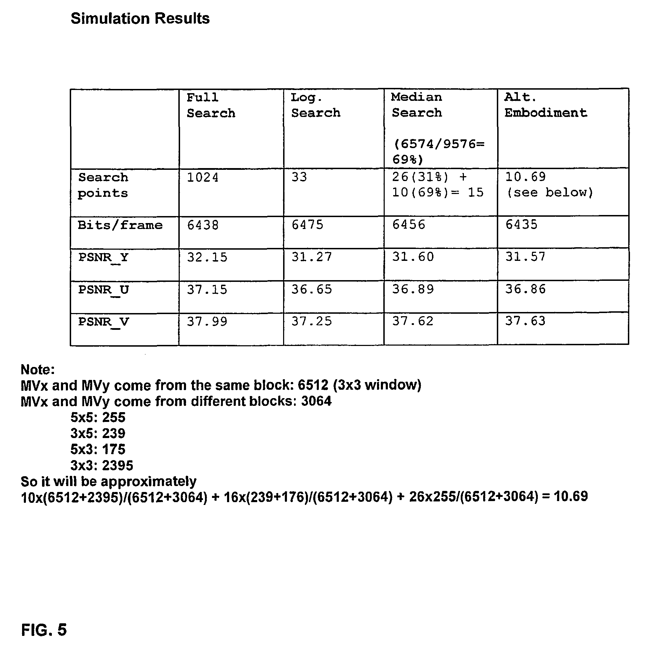

Likewise, FIG. 5 is a table illustrating the results of applying this embodiment to the sequences for which the previous embodiment was evaluated. FIG. 5 provides a comparison of results for this embodiment with results for a full search, logarithmic search, and the previous embodiment.

It will, of course, be appreciated that the invention is not restricted in scope to a particular embodiment or implementation, as previously indicated. For example, the foregoing approach, as one example of an approach in accordance with the invention, may be implemented in hardware, in software, in firmware, and/or any combination thereof. Again, intended merely as examples that do not limit the scope of the invention, an embodiment may comprise an imager including hardware, such as integrated circuit chips, that implement the foregoing. Alternatively, the imager may be coupled to a computing platform that includes software capable of implementing the foregoing. Likewise, a digital camera coupled to a desktop personal computer, for example, may implement an embodiment. Furthermore, these implementations in hardware and software may, of course, deviate from the foregoing and still be within the scope of the present invention.

For embodiments that are at least partially implemented in software, such as, for example, the previously described embodiment, such software may reside on a storage medium, such as, for example, random access memory, a CD ROM, a floppy disk, or a hard drive, such that instructions are stored, which, when executed, such as by a computing platform, such as a PC or other computing device, so that the system is capable of executing the instructions to result in motion estimation. Likewise, such software may reside in firmware also, such as in flash memory or EEPROM, for example.

While certain features of the invention have been illustrated and described herein, many modifications, substitutions, changes and equivalents will now occur to those skilled in the art. It is, therefore, to be understood that the appended claims are intended to cover all such modifications and changes as fall within, the invention.

**Claims**

1. A method of performing motion estimation for video coding comprising;
determining median motion vector components from a set of neighboring macroblocks that include motion vectors (MV1, MV2, MV3);
determining a search window size and shape based at least in part on the median motion vector components; and
searching the search window of the determined size and shape around a pixel location (Px, Py) to locate a pixel location that produces a closest match.

2. The method of claim 1, wherein searching includes searching a pixel location associated with a motion vector having zero valued components and the motion vector estimation is applied to a predetermined portion of a video frame.

3. The method of claim 2, wherein the predetermined portion of the video frame comprises a particular macroblock; and further comprising:

coding a motion vector (MV) for the particular macroblock based, at least in part, on the difference between the median motion vector components and the pixel location (Px, Py) that produces the closest match from the potential pixel locations.

4. The method of claim 1, wherein the median motion vector components comprise a horizontal motion vector component and a vertical motion vector component.

5. A method as claimed in any of claims 1 to 4, wherein determining the search window size and shape is based at least in part on the median motion vector components comprises determining at least one of:

a number of points to be searched in the search window; and
dimensions of the search window in directions of each median motion vector component.

6. The method of any of the preceding claims implemented in a computer program.

7. A system for performing motion estimation comprising:

a computing platform;
said computer platform being adapted to:

produce median motion vector components from a set of neighboring macroblocks that include motion vectors (MV1, MV2, MV3);
determine a search window size and shape based at least in part on the median motion vector components; and

being further adapted to search the determined search window around a pixel location (Px, Py) to locate a pixel location that produces a closest match.

8. The system of claim 7, wherein said platform is further adapted to search a pixel location associated with a motion vector having zero valued components.

9. The system of claim 8, wherein said platform is further adapted to coding the motion vector (MV) for the particular macroblock based, at least in part, on the difference between the median motion vector components (MV1, MV2, MV3) and the estimated motion vector and wherein said platform is adapted to determine each of the median motion vector components from the set of neighboring macroblocks independent of the other components.

10. The system of claim 9, wherein if the median motion components each come from different macroblocks in the set of neighboring macroblocks, then said platform is adapted to compute the range of the motion vector components.

11. The system of claim 10, wherein if the range of a particular component is below a predetermined value then said platform is adapted to search a window having a size that is a predetermined integer value X pixels in that particular component direction, and a predetermined integer value Y pixels otherwise, where Y is greater than X.

12. A system as claimed in any of claims 7 to 10, wherein the computer platform is arranged to determine a search window size and shape based at least in part on the median motion vector components by determining at least one of:

 a number of points to be searched in the search window; and
 dimensions of the search window in directions of each median motion vector component.

**Patentansprüche**

1. Verfahren zur Durchführung einer Bewegungsschätzung für die Videocodierung, wobei das Verfahren folgendes umfasst:

 das Bestimmen mittlerer Bewegungsvektorkomponenten aus einer Reihe benachbarter Makroblöcke, welche Bewegungsvektoren (MV1, MV2, MV3) aufweisen;
 das Bestimmen einer Suchfenstergröße und Suchfensterform zumindest teilweise an den mittleren Bewegungsvektorkomponenten;und
 das Suchen in dem Suchfenster mit vorbestimmter Größe und Form um eine Pixelposition (Px, Py), um eine Pixelposition zu lokalisieren, die eine beste Übereinstimmung liefert.

2. Verfahren nach Anspruch 1, wobei das Suchen das Suchen einer Pixelposition aufweist, die einem Bewegungsvektor zugeordnet ist, der Komponenten mit Nullbewertung aufweist, und wobei die Bewegungsvektorschätzung an einem vorbestimmten Abschnitt eines Videobilds angewendet wird.

3. Verfahren nach Anspruch 2, wobei der vorbestimmte Abschnitt des Videobilds einen bestimmten Makroblock umfasst;
und wobei das Verfahren ferner folgendes umfasst:

 das Codieren eines Bewegungsvektors (MV) für den bestimmten Makroblock zumindest teilweise auf der Basis der Differenz zwischenden mittleren Bewegungsvektorkomponenten und der Pixelposition (Px, Py), welche die beste Übereinstimmung der potenziellen Pixelpositionenliefert.

4. Verfahren nach Anspruch 1, wobei die mittleren Bewegungsvektorkomponenten eine horizontale Bewegungsvektorkomponente und eine vertikale Bewegungsvektorkomponente umfassen.

5. Verfahren nach einem der Ansprüche 1 bis 4, wobei das Bestimmen der Suchfenstergröße und -form zumindest teilweise auf mittleren Bewegungsvektorkomponenten basiert und das Bestimmen mindestens eines der folgenden Aspekte umfasst:

 einer Anzahl von Punkten, die in dem Suchfenster gesucht werden müssen; und
 der Abmessungen des Suchfensters in Richtungen jeder mittleren Bewegungsvektorkomponente.

**6.** Verfahren nach einem der vorstehenden Ansprüche, implementiert in einem Computerprogramm.

**7.** System zur Durchführung einer Bewegungsschätzung, wobei das System folgendes umfasst:

eine Rechenplattform;
wobei die genannte Rechenplattformfolgende Fähigkeiten besitzt:

das Erzeugen mittlerer Bewegungsvektorkomponenten aus einer Reihe benachbarter Makroblöcke, welche Bewegungsvektoren (MV1, MV2, MV3) aufweisen;
das Bestimmen einer Suchfenstergröße und -form zumindest teilweise auf der Basis der mittleren Bewegungsvektorkomponenten;und
das zusätzliche Suchen in dem bestimmten Suchfenster um eine Pixelposition (Px, Py), um eine Pixelposition zu lokalisieren, die eine beste Übereinstimmungliefert.

**8.** System nach Anspruch 7, wobei die genannte Plattform ferner eine Pixelposition suchen kann, die einem Bewegungsvektor mit Komponenten mit Nullbewertungen zugeordnet ist.

**9.** System nach Anspruch 8, wobei die genannte Plattform ferner die Codierung des Bewegungsvektors (MV) für den jeweiligen Makroblock zumindest teilweise auf der Basis der Differenz zwischenden mittleren Bewegungsvektorkomponenten (MV1, MV2, MV3) und dem geschätzten Bewebungsvektor ausführen kann, und wobei die genannte Plattform in der Lage ist, jede der mittleren Bewegungsvektorkomponenten aus der Reihe benachbarter Makroblöcke unabhängig von den anderen Komponenten zu bestimmen.

**10.** System nach Anspruch 9, wobei für den Fall, dass die mittleren Bewegungskomponenten jeweils von unterschiedlichen Makroblöcken in der Reihe benachbarter Makroblöcke stammen, die genannte Plattform den Bereich der Bewegungsvektorkomponenten berechnen kann.

**11.** System nach Anspruch 10, wobei für den Fall, dass der Bereich einer bestimmten Komponente unter einem vorbestimmten Wert liegt, die genannte Plattform ein Fenster mit einer Größe durchsuchen kann, die einem vorbestimmten ganzzahligen Wert von X-Pixeln in der entsprechenden Komponentenrichtung entspricht sowie ansonsten einem vorbestimmten ganzzahligen Wert von Y-Pixeln, wobei Y größer ist als X.

**12.** System nach einem der Ansprüche 7 bis 10, wobei die Rechenplattformso angeordnet ist, dass sie eine Suchfenstergröße und -form zumindest teilweise auf der Basis der mittleren Bewegungsvektorkomponenten bestimmt, indem mindestens einer der folgenden Aspekte bestimmt wird:

eine Anzahl von Punkten, die in dem Suchfenster gesucht werden müssen; und
die Abmessungen des Suchfensters in Richtungen jeder mittleren Bewegungsvektorkomponente.

**Revendications**

**1.** Procédé permettant d'effectuer une estimation de mouvement pour le codage vidéo comprenant les étapes consistant à :

déterminer des composants de vecteur de mouvement médians à partir d'un jeu de macroblocs voisins qui incluent des vecteurs de mouvement (MV1, MV2, MV3) ;
déterminer une taille et une forme de fenêtre de recherche sur la base au moins en partie des composants de vecteur de mouvement médians ; et
chercher la fenêtre de recherche de la taille et la forme déterminées autour d'un emplacement de pixel (Px, Py) pour localiser un emplacement de pixel qui produit la correspondance la plus proche.

**2.** Procédé selon la revendication 1, dans lequel la recherche comprend l'étape consistant à chercher un emplacement de pixel associé à un vecteur de mouvement ayant des composants de valeur zéro et l'estimation du vecteur de mouvement est appliquée à une partie prédéterminée d'une image vidéo.

**3.** Procédé selon la revendication 2, dans lequel la partie prédéterminée de l'image vidéo comprend un macrobloc donné ;

et comprenant en outre l'étape consistant à :

coder un vecteur de mouvement (MV) pour le macrobloc donné basé, au moins en partie, sur la différence entre les composants de vecteur de mouvement médians et l'emplacement de pixel (Px, Py) qui produit la correspondance la plus proche à partir des emplacements de pixel potentiels.

4. Procédé selon la revendication1, dans lequel les composants de vecteur de mouvement médians comprennent un composant de vecteur de mouvement horizontal et un composant de vecteur de mouvement vertical.

5. Procédé selon l'une quelconque des revendications 1 à 4, dans lequel la détermination de la taille et de la forme de la fenêtre de recherche est basée au moins en partie sur les composants de vecteur de mouvement médians et comprend l'étape consistant à déterminer au moins :

l'un de plusieurs points devant être recherchés dans la fenêtre de recherche ; et
l'une des dimensions de la fenêtre de recherche dans des directions de chaque composant de vecteur de mouvement médian.

6. Procédé selon l'une quelconque des revendications précédentes mis en oeuvre dans un programme informatique.

7. Système pour effectuer une estimation de mouvement comprenant :

une plate-forme informatique ;
ladite plate-forme informatique étant adaptée pour :

produire des composants de vecteur de mouvement médians à partir d'un jeu de macroblocs voisins qui incluent des vecteurs de mouvement (MV1, MV2, MV3) ;
déterminer une taille et forme de fenêtre de recherche sur la base au moins en partie des composants de vecteur de mouvement médians ; et
étant en outre adaptée pour chercher la fenêtre de recherche déterminée autour d'un emplacement de pixel (Px, Py) pour localiser un emplacement de pixel qui produit la correspondance la plus proche.

8. Système selon la revendication 7, dans lequel ladite plate-forme est en outre adaptée pour chercher un emplacement de pixel associé à un vecteur de mouvement ayant des composants de valeur zéro.

9. Système selon la revendication 8, dans lequel ladite plate-forme est en outre adaptée pour coder le vecteur de mouvement (MV) pour le macrobloc donné basé, au moins en partie, sur la différence entre les composants de vecteur de mouvement médians (MV1, MV2, MV3) et le vecteur de mouvement estimé et dans lequel ladite plate-forme est adaptée pour déterminer chacun des composants de vecteur de mouvement médians à partir du jeu de macroblocs voisins indépendant des autres composants.

10. Système selon la revendication 9, dans lequel si les composants de mouvement médians viennent chacun de différents macroblocs dans le jeu de macroblocs voisins, alors ladite plate-forme est adaptée pour calculer la plage des composants de vecteur de mouvement.

11. Système selon la revendication 10, dans lequel si la plage d'un composant donné est inférieure à une valeur prédéterminée alors ladite plate-forme est adaptée pour chercher une fenêtre ayant une taille qui est une valeur d'entier prédéterminée de X pixels dans cette direction de composant donnée, et une valeur d'entier prédéterminée de Y pixels autrement, dans lequel Y est supérieur à X.

12. Système selon l'une quelconque des revendications 7 à 10, dans lequel la plate-forme informatique est agencée pour déterminer une taille et une forme de fenêtre de recherche sur la base au moins en partie des composants de vecteur de mouvement médians en déterminant au moins :

l'un de plusieurs points devant être recherchés dans la fenêtre de recherche ; et
l'une des dimensions de la fenêtre de recherche dans des directions de chaque composant de vecteur de mouvement médian.

|  | MV2 | MV3 |
|---|---|---|
| MV1 | MV | |

MV  : Current motion vector
MV1: Previous motion vector
MV2: Above motion vector
MV3: Above right motion vector

FIG. 1: Application of an embodiment of motion vector estimation/prediction in

accordance with the invention.

**Simulation Results**

|  | Full Search | Logarithmic Search | Median Search |
|---|---|---|---|
| Search points | 1024 | 33 | (25+1)(31%)+(9+1)(6 9%)= 15 |
| Bits/frame | 6447 | 6246 | 6155 |
| PSNR_Y | 32.03 | 31.14 | 31.38 |
| PSNR_U | 37.20 | 36.53 | 36.72 |
| PSNR_V | 37.95 | 37.23 | 37.50 |

FIG. 2

Best matching block that gives lowest
SAD

(x0-16,y0-16) (x0+x,y0+y)

(x0,y0)

Search
window

(x0+15,y0+15)

(x0,y0)

Previous
Reconstructed Frame

Current Frame

FIG. 3: Integer Pixel Motion Estimation

Search window centered around Px, Py

(5,4)

X (5,3)

(9,3)

(4,2)

FIG. 4

## Simulation Results

|  | Full Search | Log. Search | Median Search (6574/9576= 69%) | Alt. Embodiment |
|---|---|---|---|---|
| Search points | 1024 | 33 | 26(31%) + 10(69%)= 15 | 10.69 (see below) |
| Bits/frame | 6438 | 6475 | 6456 | 6435 |
| PSNR_Y | 32.15 | 31.27 | 31.60 | 31.57 |
| PSNR_U | 37.15 | 36.65 | 36.89 | 36.86 |
| PSNR_V | 37.99 | 37.25 | 37.62 | 37.63 |

Note:
MVx and MVy come from the same block: 6512 (3x3 window)
MVx and MVy come from different blocks: 3064
    5x5: 255
    3x5: 239
    5x3: 175
    3x3: 2395
So it will be approximately
10x(6512+2395)/(6512+3064) + 16x(239+176)/(6512+3064) + 26x255/(6512+3064) = 10.69

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0592128 A

### Non-patent literature cited in the description

- Video coding for low bit-rate communications. *ITU-T Recommendation H.263,* November 1995
- Generic Coding of Moving Pictures and Associated Audio Information: Video. *ISO/IEC 13818-2: International Standard,* 1995
- Coding of audio-visual Objects-Part 2: Visual Amendment 1; Visual extensions. *ISO/IEC 14496-2: Draft,* 06 January 2000
- MPEG-4 Video Verification Model Version 8.0 ISO/IEC JTC1/SC29/WG11 MPEG97/N1796. *ISO/IEC JTC1/SC29NVG11 MPEG97/N1796,* July 1997, 1-283
- **KOSSENTINI, F. et al.** Predictive RD optimized motion estimation for very low bit-rate coding. *IEEE Journal on Selected Areas in Communication,* 01 December 1997, vol. 15 (9), 1752-1762
- **DUBIUSSON S et al.** Motion compensation using adaptive rectangular partitions. *IMAGE PROCESSING, 1999. ICIP 99. PROCEEDINGS. 1999 INTERNATIONAL CONFERENCE ON KOBE,* 24 October 1999, ISBN 0-7803-5467-2, 56-60
- **HYUN MUN KIM et al.** CAS: Context Adaptive Search for motion estimation. *PROCEEDINGS INTERNATIONAL CONFERENCE ON INFORMATION TECHNOLOGY: CODING AND COMPUTING, PROCEEDINGS INTERNATIONAL CONFERENCE ON INFORMATION TECHNOLOGY: CODING AND COMPUTING,* 02 April 2001, ISBN 0-7695-1062-0, 202-206